# EUROPEAN PATENT SPECIFICATION

(11) **EP 0 544 353 B1**
(45) Date of publication and mention of the grant of the patent: **27.12.1995**
(21) Application number: 92203485.5
(22) Date of filing: 13.11.1992
(51) Int. Cl.: F16L 59/02

(54) **Insulation material**
Isoliermaterial
Matériau d'isolation

(30) Priority: 20.11.1991 NL 9101935
(43) Date of publication of application: 02.06.1993
(73) Proprietor: Boonstra, Harm Sjoerd, NL-1671 CJ Medemblik (NL)
(72) Inventor: Boonstra, Harm Sjoerd, NL-1671 CJ Medemblik (NL)
(74) Representative: Koomen, M.J.I.

(56) References cited:
- DE-A- 3 932 291
- DE-C- 2 554 072
- NL-A- 6 612 848
- US-A- 4 442 585

## Description

The present invention relates to an insulation material, more in particular an insulation material having a sound damping effect and intended for use around pipes or tubes.

The sound-proofing of pipes or tubes according to the known art takes place as follows.

An insulation material is used which is comprised of a lead foil or film which on one side is provided with a foam layer. This material is cut to an appropiate size and wrapped around the tube, whereby the lead foil is positioned outward, and the foam layer is positioned inward and against the wall of the tube. The longitudinal edges of the insulation material are fastened to each other and thereby the insulation material is fastened around and against the tube by wrapping a wire around the material or by connecting the opposed longitudinal edges with adhesive tape. The exterior of the insulation provided in this manner, which is formed by the lead film, may easily be indented and deformed.

US-A-4 442 585 discloses a material for acoustically insulating a pipe, wherein an insulation core is covered by an acoustic insulation means comprised of a thin lead sheet. The application of this insulation material is very labour intensive and by reason of this rather costly. Further, the exterior of the insulation is not very fine.
From DE-A-3 932 291 is known an insulation material to prevent or reduce heat loss of pipes, which insulation material is comprised of a plastic film, onto one side of which two foam layers are provided.
From NL-A-6 612 848 is known an insulation material, comprised of a plastic film with a foam layer, which is provided with means for fastening the edges of the plastic film to each other.

The present invention aims to provide an acoustically insulating material, which is simple to apply and very esthetical.

According to the invention, an insulation material, comprised of a plastic film, on one side of which two or more foam layers are provided, wherein the longitudinal edges of the plastic film are provided with means for fastening these edges to each other, and in between the foam layers a sound-damping layer is provided.

According to a further characteristic of the insulation material according to the invention the means are comprised of longitudinal edges flanged in opposite directions into a hook shape, which co-operate with slidable thereon further longitudinal edges flanged in directions towards each other into a hook shape of a sealing strip.

According to another characteristic of the insulation material according to the invention the sound-damping layer is comprised of lead.

This insulation material may be applied to for example a pipe in a simple manner. When the material is wrapped around it, the longitudinal edges of the plastic film are fastened to each other by sliding the sealing strip with its longitudinal edges flanged in directions towards one another around the longitudinal edges flanged in opposite directions of the plastic film. In this manner the longitudinal edges of the plastic film are fastened to each other in a simple and little labour intensive manner. The insulation thus provided does not include wrappings or tape, while the plastic film provides the insulation with a smooth exterior.

The plastic film may be comprised of a heavy PVC film, or for example a polyethylene film.

The invention will now be described further with reference to an embodiment of the invention.

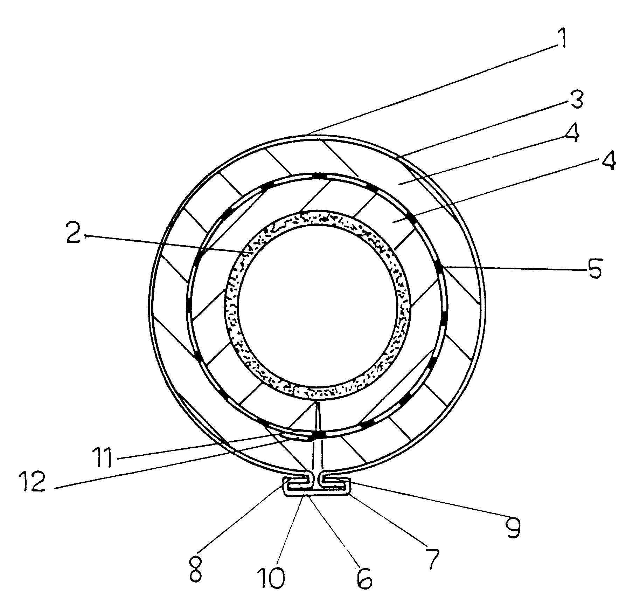

In the drawing is shown an insulation material 1 which is applied around a pipe or tube 2. The insulation material is comprised of a plastic film 3 in which two foam layers 4 are provided, in between which layers a lead film 5 is provided. The longitudinal edges 6 and 7 are flanged in opposite directions into a hook shape, and co-operate with the longitudinal edges 8 and 9 flanged in directions towards one another into a hook shape of the sealing strip 10.
At the spot of the connection of the longitudinal edges 6 and 7 of the plastic film the longitudinal edges 11 and 12 of the lead film overlap.

## Claims

1. Insulation material, comprised of a plastic film (3), on one side of which two or more foam layers (4) are provided, wherein the longitudinal edges (6, 7) of the plastic film (3) are provided with means for fastening these edges (6, 7) to each other, and in between the foam layers (4) a sound-damping layer (5) is provided.

2. Insulation material according to claim 1, characterized in that the means are comprised of longitudinal edges (6, 7) flanged in opposite directions into a hook shape, which co-operate with slidable thereon further longitudinal edges (8, 9) flanged in directions towards each other into a hook shape of a sealing strip (10).

3. Insulation material according to claim 1 or 2, characterized in that the sound-damping layer (5) is comprised of lead.

4. Insulation material according to one of the preceding claims, characterized in that at the spot of the connection of the longitudinal edges (6, 7) of the plastic film (3) the longitudinal edges (11, 12) of the sound-damping layer (5) overlap.

## Patentansprüche

1. Isoliermaterial mit einem Plastikfilm (3), auf dessen einer Seite zwei oder mehr Schaumlagen (4) vorgesehen sind, wobei die längsverlaufenden Kanten (6, 7) des Plastikfilms (3) mit Mitteln zum Befestigen dieser Kanten (6, 7) aneinander versehen sind und zwischen den Schaumlagen (4) eine geräuschdämmende Schicht (5) angebracht ist.

2. Isoliermaterial nach Anspruch 1, dadurch gekennzeichnet, daß die Mittel längsverlaufende Kanten (6, 7) aufweisen, die in entgegengesetzten Richtungen hakenförmig umgebogen sind, die mit weiteren darauf gleitbaren längsverlaufenden Kanten (8, 9) zusammenwirken, die in gegeneinander verlaufenden Richtungen in eine Hakenform eines Verschlußbandes (10) umgebogen sind.

3. Isoliermaterial nach Anspruch 1 oder 2, dadurch gekennzeichnet, daß die geräuschdämmende Schicht (5) aus Blei besteht.

4. Isoliermaterial nach einem der vorhergehenden, Ansprüche, dadurch gekennzeichnet, daß die längsverlaufenden Kanten (11, 12) der geräuschdämmenden Schicht (5) an der Verbindungsstelle der längsverlaufenden Kanten (6, 7) des Plastikfilms (3) einander überlappen.

## Revendications

1. Matériau d'isolation, constitué par un film de matière plastique (3), portant au moins deux couches de mousse (4) sur l'une de ses faces, caractérisé en ce que les bords longitudinaux (6,7) du film en matière plastique (3) comportent des moyens pour fixer ces bords (6,7) l'un à l'autre, et en ce qu'une couche d'amortissement sonore (5) est disposée entre les couches de mousse (4).

2. Matériau d'isolation selon la revendication 1, caractérisé en ce que les moyens de fixation des bords longitudinaux (6,7) comportent sur ceux-ci des lèvres rabattues dans des directions opposées, pour réaliser un profil d'accrochage adapté à coopérer avec un profil d'accrochage complémentaire formé sur deux bords longitudinaux (8,9) d'une bande de fermeture (10), par deux lèvres rabattues l'une vers l'autre et pouvant coulisser sur les deux autres lèvres rabattues à l'opposé l'une de l'autre.

3. Matériau d'isolation selon la revendication 1 ou 2, caractérisé en ce que la couche d'amortissement sonore est constituée par du plomb.

4. Matériau d'isolation selon l'une des revendications précédentes, caractérisé en ce que, à l'endroit où se rejoignent les bords longitudinaux (6,7) du film en matière plastique (3), les bords longitudinaux (11,12) de la couche d'amortissement sonore (6) se rejoignent.
